# EUROPEAN PATENT APPLICATION

(11) **EP 2 592 128 A1**
(43) Date of publication of application: **15.05.2013**
(21) Application number: 12191818.9
(22) Date of filing: 08.11.2012
(51) Int. Cl.: C09K 8/03, C09K 8/52, C09K 8/68

(54) **Metallic particle induced saponification of fatty acids as breakers for viscoelastic surfactant-gelled fluids**

(30) Priority: 11.11.2011 US 201113294301
(71) Applicant: Baker Hughes Incorporated, Houston, TX 77019-2118 (US)
(72) Inventor: Crews, James B., Willis, TX 77318 (US)
(74) Representative: Hoffmann, Benjamin

(57) **Abstract**

A method for affecting the viscosity of an aqueous fluid gelled with a VES comprising is disclosed. The method includes providing an aqueous fluid and adding to the aqueous fluid, in any order: at least one VES comprising a non-ionic surfactant, cationic surfactant, amphoteric surfactant or zwitterionic surfactant, or a combination thereof, in an amount sufficient to form a gelled aqueous fluid comprising a plurality of elongated micelles, a glyceride oil comprising a fatty acid, and a plurality of metallic particles to produce a mixture comprising dispersed metallic particles. The method also includes dissolving at least a portion of the metallic particles in the aqueous fluid to provide a compound comprising a metallic base and forming in situ a soap reaction product of the fatty acid with the compound, wherein the soap reaction product is present in an amount effective to increase, decrease, or increase and then decrease a viscosity of the gelled aqueous fluid.

## Description

### BACKGROUND

Viscosity controlled wellbore fluids comprising gels, such as viscoelastic surfactant gels, are used for various purposes in wellbore operations, such as drilling, completion, production and sequestration or other operations, particularly during hydrocarbon recovery operations. These viscosity controlled fluids must be adapted to form high viscosity fluids for operations such as fracturing, but must also be adapted for "breaking" or reducing their viscosity for subsequent operations, such as hydrocarbon recovery operations.

Fracturing fluids are complex and must simultaneously provide high temperature stability at high pump rates and fluid shear rates that may tend to cause the fluids to degrade and prematurely settle out constituents, such as proppant, before the fracturing operation is complete. Various fracturing fluids have been developed, but most commercially used fracturing fluids are aqueous-based liquids or fluids that have either been gelled or foamed using a gelling agent. Polymeric gelling agents, such as solvatable polysaccharides that are gelled by crosslinking to increase viscosity have been used. Non-polymeric viscoelastic surfactant (VES) gelling agents have also been used. In many cases, VES materials are advantageous compared to polymer gelling agents because they employ low molecular weight surfactants rather than high molecular weight polymers and may leave less gel residue within the pores of oil producing formations, leave no filter cake on the formation face and minimal amounts of residual surfactant coating the proppant, and inherently do not create microgels or fish-eye-type polymeric masses.

VES materials also require breaker systems for the non-polymeric VES-based gelled fluids to reduce their viscosity after use. These have generally included using external or reservoir conditions for viscosity reduction (breaking) and VES fluid removal (clean-up) during hydrocarbon production, as well as rearranging, disturbing, and/or disbanding of the VES worm-like micelle structure by contact with hydrocarbons within the reservoir, more specifically contacting and mixing with crude oil and condensate hydrocarbons. While useful, these breaker systems have limitation, including incomplete removal of the VES fluids, resulting in residual formation damage (e.g., impairment of hydrocarbon production). Post-treatment clean-up fluids composed of either aromatic hydrocarbons, alcohols, surfactants, mutual solvents, and/or other VES breaking additives have been employed in an attempt to break the VES fluid for removal, but their effectiveness has been limited, resulting in well sections with unbroken or poorly broken VES-gelled fluid that impairs hydrocarbon production, or in production delays associated with instances where VES breaking and clean-up takes a long time, such as several days up to possibly months to break and then produce the VES treatment fluid from the reservoir.

Internal breakers that are activated within the fluid, such as by downhole temperatures have also been used with VES-gelled fluids, and typically allow a controlled rate of gel viscosity reduction in 1 to 8 hours, similar to gel break times common for conventional crosslinked polymeric fluid systems. VES-gelled fluids are not comprised of polysaccharide polymers that are easily degraded by use of enzymes or oxidizers, but are comprised of surfactants that associate and form viscous rod-shaped or worm-shaped micelle structures. Conventional enzymes and oxidizers have not been found to act and degrade the surfactant molecules or the viscous micelle structures they form. Other internal breakers for VES-gelled fluids have been proposed in US 7,728,044 B2 to Crews, which describes aqueous fluids viscosified with viscoelastic surfactants (VES) that may have their viscosities affected (increased or reduced or broken) by the indirect or direct action of a composition that contains at least one fatty acid that has been affected, modified or reacted with an alkali metal base, an alkali earth metal base, ammonium base, and/or organic base compound, optionally with an alkali metal halide salt, an alkali earth metal halide salt, and/or an ammonium halide salt to saponify the fatty acid and form a soap. The composition containing the resulting saponification product is believed to either act as a co-surfactant with the VES itself to increase viscosity and/or possibly by disaggregating or otherwise affecting the micellar structure of the VES-gelled fluid to reduce viscosity. While these internal breakers are very useful, the development of additional internal breakers to provide enhanced control of the breaking of VES fluids is very desirable, particularly in view of the widespread use of these fluids in fracturing and other downhole operations.

### SUMMARY

In an exemplary embodiment, a method for affecting the viscosity of an aqueous fluid gelled with a VES comprising is disclosed. The method includes providing an aqueous fluid and adding to the aqueous fluid, in any order: at least one VES comprising a non-ionic surfactant, cationic surfactant, amphoteric surfactant or zwitterionic surfactant, or a combination thereof, in an amount sufficient to form a gelled aqueous fluid comprising a plurality of elongated micelles, a glyceride oil comprising a fatty acid, and a plurality of metallic particles to produce a mixture comprising dispersed metallic particles. The method also includes dissolving at least a portion of the metallic particles in the aqueous fluid to provide a compound comprising a metallic base and forming in situ a soap reaction product of the fatty acid with the compound, wherein the soap reaction product is present in an amount effective to increase, decrease, or increase and then decrease a viscosity of the gelled aqueous fluid.

In another exemplary embodiment, a method for affecting the viscosity of an aqueous fluid gelled with a VES comprising is disclosed. The method includes
providing an aqueous fluid;
adding to the aqueous fluid, in any order:
   i. at least one VES comprising a non-ionic surfactant, cationic surfactant, amphoteric surfactant or zwitterionic surfactant, or a combination thereof,
   ii. a glyceride oil comprising a fatty acid, and
   iii. a plurality of metallic particles to produce a mixture comprising dispersed metallic particles,
      to form a gelled aqueous fluid comprising a plurality of elongated micelles;
dissolving at least a portion of the metallic particles in the aqueous fluid to provide a compound comprising a metallic base; andforming in situ a soap reaction product of the fatty acid with the compound, wherein the soap reaction product affects the viscosity of the gelled aqueous fluid. In this method, the soap reaction product increases, decreases, or increases and then decreases a viscosity of the gelled aqueous fluid.

### BRIEF DESCRIPTION OF THE DRAWINGS

Referring now to the drawings wherein like elements are numbered alike in the several Figures:

FIG. 1 is a flowchart illustrating an exemplary embodiment of a method of affecting viscosity as disclosed herein;

FIG. 2 is a schematic illustration of viscosity as a function of time for an exemplary embodiment of an aqueous fluid and method of affecting viscosity of the fluid as disclosed herein;

FIG. 3 is a schematic illustration of viscosity as a function of time for a second exemplary embodiment of an aqueous fluid and method of affecting viscosity of the fluid as disclosed herein; and

FIG. 4 is a schematic illustration of viscosity as a function of time for a third exemplary embodiment of an aqueous fluid and method of affecting viscosity of the fluid as disclosed herein.

### DETAILED DESCRIPTION

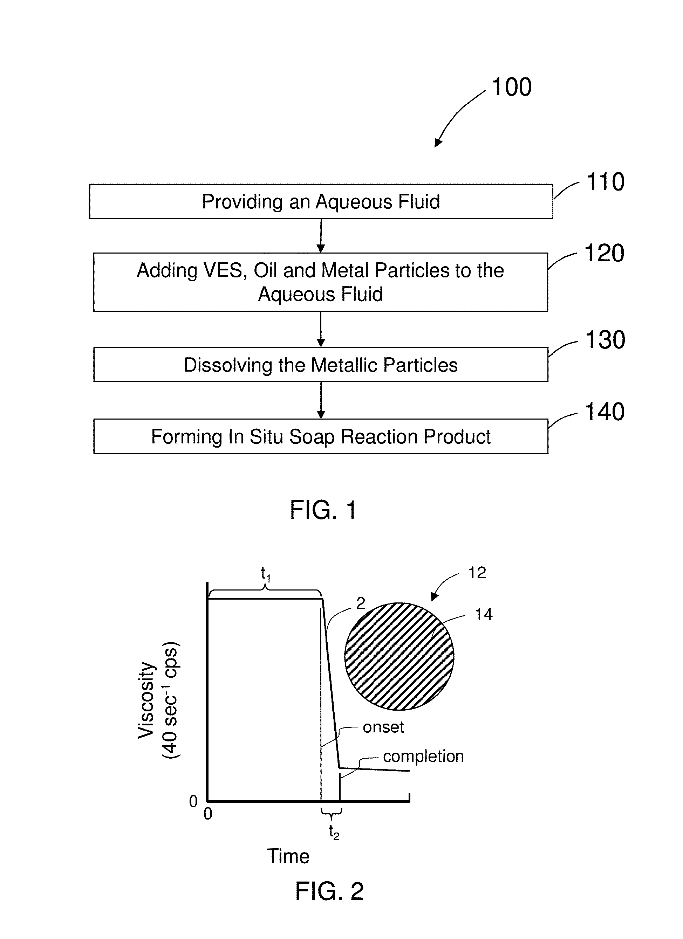

Referring to the Figures, and particularly FIG. 1, a method 100 of affecting the viscosity of aqueous fluids gelled with VES (i.e. surfactants that develop viscosity in aqueous brines by formation of rod-or worm-shaped micelle structures) is disclosed. The method 100 may advantageously be employed to provide an internal breaker to break the viscosity of aqueous fluids gelled with VES, but may also be employed to provide an external breaker. The method 100 will allow selectively controllable breaks, such as within about 0.5 to about 96 hours. The method 100 provides improved control over various aspects of the breaks, including, without limitation, the timing of breaking of the aqueous fluids gelled with VES by providing a selectively controllable breaking mechanism. The improved control may include selectively controlling the onset or initiation of breaking, the rate at which the viscosity is broken, and the extent or extensiveness of the breaking that occurs. The extent or extensiveness to which the breaking occurs may be assesed in any suitable manner, such as by measuring the volume percentage of the fluid that has its viscosity reduced, or by measuring the reduction of the viscosity that occurs during breaking, or the like. The method utilizes the dissolution of metallic particles to affect enhanced control of saponification and may enable controllable saponification over a wider temperature range, or higher rates for the saponification reaction in order to achieve enhanced viscosity break characteristics, such as nearly right angle break profiles corresponding to very high rates of change of the viscosity, including rapid increases, decreases or rapid increases followed by rapid decreases. The rate of saponification induced by the metal particles may be further controlled by employing various bases and salts, particularly alkaline metal and alkaline earth metal bases and salts, such as NaOH, KOH, NaCl, KCl, MgCl₂, CaCl₂, CaBr₂ and the like.

The fact that fluids viscosified with a VES may have their viscosities affected (increased or reduced, e.g. have their gels enhanced or broken) by the indirect or direct action of a composition that contains at least one fatty acid that has been affected, modified or reacted with an alkali metal base, an alkali earth metal base, ammonium base, and/or organic base compound, optionally with an alkali metal halide salt, an alkali earth metal halide salt, and/or an ammonium halide salt is described in US Patents 7,728,044 B2 and US 8,044,106 to Crews, which are hereby incorporated herein by reference in their entirety. The composition containing the resulting saponification product is believed to either act as a co-surfactant with the VES itself to increase viscosity and/or possibly by disaggregating or otherwise affecting the micellar structure of the VES-gelled fluid. This application discloses particular advantages, particularly enhanced control of the saponification reaction and resulting soap products that may be gained by the incorporation of metallic particles into the aqueous fluid.

The method 100 for affecting the viscosity of an aqueous fluid gelled with a VES includes providing 110 an aqueous fluid. The method also includes adding 120 to the aqueous fluid, in any order: at least one VES selected from a group consisting of non-ionic surfactants, cationic surfactants, amphoteric surfactants, zwitterionic surfactants and combinations thereof in an amount sufficient to form a gelled aqueous fluid comprising a plurality of elongated micelles, a glyceride oil comprising a fatty acid, and a plurality of metallic particles to produce a mixture comprising dispersed metallic particles. The method 100 further includes dissolving 130 the metallic particles in the aqueous fluid to provide a compound comprising a metallic base. Still further, the method 100 includes forming 140 in situ a soap reaction product of the fatty acid with the compound, wherein the soap reaction product is typically present in an amount effective to increase, decrease, or increase and then decrease a viscosity of the gelled aqueous fluid.

The viscosity-affecting components discussed herein may be added to the gel and put into solution during a VES-gel treatment and the alteration of the fatty acid or the saponification may occur during mixing and pumping of the fluid downhole as an internal breaker. The method may also be used where most of the saponification occurs within the reservoir shortly after the treatment affected using the fluid is complete, such as, for example, a timed saponification to break the viscosity of an aqueous fluid gelled with a VES. The viscosity-affecting components may increase, decrease, or increase and then decrease the viscosity of the gelled aqueous fluids. In the case of decreasing the viscosity of the aqueous gelled fluid, it is not necessary for the gel to be completely "broken" (e.g. to the approximate viscosity of water) or for all of the gel to be eliminated for the method or additive to be considered successful.

Alternatively, the fluid components described herein may be pre-formed and added later separately, if needed, as an external breaker solution to remove VES gelled fluids already placed downhole. In some situations it may be of utility to pre-form the soaps at the surface of a hydrocarbon recovery operation, or separate from another task. The utility of "partially pre-formed" saponification products would be to gain extra initial viscosity, regardless of the final result, that is, whether to only increase viscosity or to only completely break the viscosity.

"Complete saponification" (or near-complete saponification) at the surface (complete to near-complete pre-forming) may occur for the increase in viscosity application, but probably not for the VES-breaking application. However, complete to near-complete saponification could be used for VES-breaking when a measurable amount of near wellbore and fracture cool down is expected before or during a treatment. For example, polymeric based frac pack fluids may be designed in light of near-wellbore and fracture cool down by the injection of the cooler fluids that are pumped ahead of the frac pack treatment and when required fluid efficiency is low, as described in SPE paper 71658.

Unlike the addition of a co-surfactant with viscoelastic surfactants to gel an aqueous fluid, in one embodiment the co-surfactant or saponification or soap reaction products may be formed within the fluid in situ using one or more fatty acids and a plurality of metallic particles that are configured to dissolve in the aqueous fluid. Without being limited by theory, the dissolution of the metallic particles provides a source of metallic ions to form a metallic base or a salt, and thereby affect saponification of the fatty acid to form an in situ soap reaction product which causes a change in the viscosity of the aqueous VES gel. This may be used to increase the viscosity of the gel, such as by enhancing the order or arrangement of the micellar structure, generally by using relatively smaller amounts of the metallic particles, i.e., to affect a lower concentration of metallic cations. It may also be used to decrease the viscosity of the gel, such as by changing the micellar structure from elongated tubular structures having a head and a tail which may be densely packed together in various arrangements to more spherical structures which do not have a defined head and a tail, generally by using relatively larger amounts of the metallic particles, i.e., to affect a higher concentration of metallic cations. The amount needed for either application is dependent on several factors, which include VES concentration, fluid temperature, mix water salinity, type and amount base saponifying agents used, and the like. Being able to form the soap reaction products in situ using dissolution of the metallic particles is very advantageous, regardless of whether it is used as an internal or external breaker, and whether incorporated on the surface prior to a fluid treatment, during a fluid treatment, or after a fluid treatment. It is expected that the dissolution of the metallic particles to form the soap reaction product after a fluid treatment would be primarily be used for a VES breaking application, but use to further increase the viscosity of the VES gel following a particular treatment is also possible.

In certain embodiments, controlled viscosity reduction rates may be achieved from about 75°F (23.9°C) to about 325°F (162.8°C). In other embodiments these gel-breaking products and method 100 works by rearrangement of the VES micelle type or structure from rod-shaped or worm-shaped elongated structures to more spherical structures. In other words, method 100 and the compositions made thereby herein will reduce the viscosity of the gelled aqueous fluid either directly, or by disaggregation or rearrangement of the VES micellar structure. Disaggregating may be understood in one non-limiting embodiment when the micelles are not closely associated physically, that is no longer aggregated together, as contrasted with rearrangement which may be understood as a different physical arrangement or aggregation that has reduced viscosity, such as changing from rod-shaped micelles associated with higher viscosities to substantially spherical shapes associated with lower viscosities.

Providing 110 of an aqueous fluid may include any suitable aqueous fluid, particularly various wellbore fluids, and more particularly various well bore fluids used in well drilling, completion and production operations. In particular, providing 110 of an aqueous fluid may include various aqueous fracturing fluids. Method 100 is particularly useful for controlled viscosity enhancement, reduction or enhancement followed by reduction of VES based fracturing fluids. Method 100 may also be used for breaking VES gravel pack and loss circulation pill fluids.

This VES breaking method is a significant improvement in that it provides a delay mechanism for in situ (i.e. downhole) saponification; that is the composition formed by adding 120 is designed to not provide forming 140 of saponification products until the dissolving 130 occurs; whereby dissolving 130 of at least a portion of the metallic particles creates a time delay in forming 140 the soap reaction products that previous methods, such as those employed in the '044 patent, do not provide. At least a portion of the metallic particles in the gelled aqueous fluid must first be dissolved, corroded or otherwise degraded before saponification can occur, and the rate of dissolving 130 can be selectively controlled by the selection of the metallic particles, including their composition, amount, morphological and metallurgical characteristics, such as size, shape, porosity, amount of stored strain energy, coating thickness (if present) and the like, dissolution rate in the gelled aqueous fluid and other characteristics of the metallic particles that affect dissolving 140.

For metallic particles having a coating layer, including coated metallic particles having a coating layer and particle cores that have been formed into a cellular nanomatrix of the coating layer material having the particle cores dispersed throughout the cellular nanomatrix as described herein, the coating layer material corrosion rate may be used to selectively control the saponification reaction. For example, by selecting a particle core material that is configured to rapidly dissolve in the gelled aqueous fluid and rapidly affect saponification and lower the viscocity of the fluid when dissolved, and a coating layer where the layer characteristics, including the coating material, thickness, dissolution rate in the gelled aqueous fluid and other aspects described herein, may be selected and configured to control the release (e.g., dissolving) of the particle core material, and thus selectively control the saponification reaction.

The metallic particles, whether coated or uncoated, may also be selected and configured such that dissolving 140 is selectively controllable based on a predetermined wellbore condition, such as a wellbore fluid composition, temperature, pressure or pH value, or a combination thereof. Thus, a wellbore condition may be used to control the dissolution of the metallic particles and the resultant saponification reaction and breaking of the gelled aqueous fluid. In other words, the requirement that the metallic particles must first be dissolved before the oil can be saponified, and that they may be configured so as to be selectively and controllably dissolved, is an advantageous benefit over the '044 patent by providing selectively controllable saponification and breaking of the viscosity of the gelled aqueous fluid, such as, for example, by delaying saponification until a predetermined wellbore temperature is achieved.

Temperature is a particularly useful wellbore condition because the metallic materials, such as those described herein for the metallic particles, including the coating layers and/or the particle cores, are temperature dependent, may be selected to be temperature dependent such that, for example, they have low or substantially no appreciable rate of dissolution or corrosion at lower temperatures and a much higher rate, including a rapid rate, at higher temperatures.

In one exemplary embodiment, the metallic particles may be selected to delay saponification (i.e., breaking) to a predetermined temperature, such as a wellbore temperatures above 200°F (93.3°C), and more particularly above 250°F (121.1°C). In another embodiment, the metallic particles may be selected to delay saponification in response to exposure to achieving a predetermined wellbore fluid composition, including, for example, the injection of various materials, such as various wellbore fluids (e.g., acids or brines), into the gelled aqueous fluid to alter its composition or characteristics, such as its pH, and trigger the dissolution or corrosion of the metallic particles.

It will be appreciated that the metallic particles may be selected and configured to provide selectably controllable dissolution in response to one or more predetermined wellbore condition as described above. Additionally, the method 100 advantageously may enable the use of greater amounts (e.g., volumes) of oil than described in '044 patent, such as twice as much oil in the composition, since aggressive saponification will not occur until dissolving 130 of the metallic particles occurs, and once the oil is saponified the additional soap reaction products may provide a more complete or "right angle" (i.e., high breaking rate) final break of the VES gel, including right angle breaks for high temperature treatments, more particularly treatments above about 200°F (93.3°C). In any case, the use of metal particles to control the rate of saponification reaction products generated may be designed to give breaking rates for VES-based fluids that the industry is accustomed to achieving with conventional polymer-based fracturing fluids.

The method 100 also includes adding 120 to the aqueous fluid, in any order: at least one VES comprising a non-ionic surfactant, cationic surfactant, amphoteric surfactant or zwitterionic surfactant, or a combination thereof, preferably in an amount sufficient to form a gelled aqueous fluid comprising a plurality of elongated micelles, a glyceride oil comprising a fatty acid, and a plurality of metallic particles to produce a mixture comprising dispersed metallic particles. In one embodiment, the VES is added to the aqueous fluid to form the gelled aqueous fluid prior to the addition of the other constituents. In other embodiments, the glyceride oil or metallic particles, or both may be added prior to adding the VES. In yet another embodiment, these constituents may be added simultaneously. Adding 120 may also include various conventional mixing operations to form the gelled aqueous fluid, mix the glyceride oil into the aqueous fluid and disperse the metallic particles forming a mixture of the constituents. In one embodiment, the mixture may be a homogeneous mixture of the constituents such that the gelled aqueous fluid is homogeneous. In another embodiment, the mixture may be a heterogeneous mixture of the constituents such that the gelled aqueous fluid is heterogeneous. In addition to the VES, oil and metal particles, a base or a salt may also be added to promote or enhance the control of saponification or the dissolution of the metal particles, or both.

Any suitable oil, including glyceride oil, containing fatty acids may be added to the aqueous fluid and used, as described herein, to selectively control the viscosity of VES-gelled fluids not only to diminish their viscosity, but to increase it as well, including various naturally-occurring fatty acids. Suitable naturally-occurring glyceride oils containing fatty acids include various plant oils: e.g. corn oil, safflower oil, canola oil, olive oil, peanut oil, sunflower oil, soybean oil, almond oil, and the like; and various animal oils (e.g. fish oils, mammal oils), including fats, i.e. oils that are in a semi-solid or solid form at ambient temperature. Preferably the natural fatty acids are in glyceride form. However, the natural fatty acids may also be in the free fatty acid form. The oil composition may be made up of various triglycerides (TG), diglycerides (DG), and/or monoglycerides (MG). Additionally, the use of oils that are higher in polyunsaturated fatty acids PUFA) and/or monounsaturated fatty acids (MUFA) than saturated fatty acids (SFA) are of utility, and in many non-restrictive cases preferred. While artificially created fatty acids would be expected to be useful herein as well, such as hydrogenated or partially hydrogenated fatty acids, or various fatty acids manufactured from petroleum crude stock, naturally-occurring fatty acids in the glyceride form may be more economical and versatile for practicing the method described herein. The oil may be present in any suitable amount. In one embodiment, the oil may be present in an amount of about 0.01 percent to about 0.2 percent by volume of the aqueous fluid.

For increasing VES fluid viscosity no noticeable by-products or phase separations occur. The amount of fatty acid needed and fatty acid soap that is formed to enhance the VES fluid viscosity is a relatively small amount and appears to readily associate with the larger amount of viscoelastic surfactants present in the fluid; thereby the soap readily stays soluble or dispersed within the viscosity enhanced fluid.

For breaking or reducing VES fluid viscosity, typically about two or more times the amount of soap compounds (i.e. amount of saponified fatty acids formed and fatty acids needed) are required, with the total amount of soap needed depending on the types and amounts of soaps formed, fluid temperature, VES concentration, mix water salinity, and the like. It has been found that soaps formed by divalent ions have more breaking activity than monovalent forms: that is "hard soaps" more readily degrade VES viscosity than "soft soaps".

Hard soaps are defined herein to include, but are not necessarily limited to soaps comprising divalent and/or trivalent cations, such as calcium, magnesium, manganese, zinc, iron or aluminum, or a combination thereof, and the like. Soft soaps are defined herein to include, but not necessarily be limited to soaps comprising monovalent cations, such as sodium, potassium, triethanolamine, and the like. Hard soaps are known to be much less soluble in water than soft soaps and can, at high enough concentrations, in certain VES fluids and under certain conditions potentially precipitate and scale.

In one embodiment, to resolve the potential occasions where hard soap precipitation may occur, a ratio of soft to hard soap may be of utility: that is, the ratio of soft soap to hard soap may be optimized where the soft soaps aids the solubility and dispersibility of the hard soaps formed, with the ratio of them controllable to limit a potential phase separation or precipitating of hard soap from the broken VES fluid.

In another non-limiting enhancement, one or more hard soap "solubilizers" besides the viscoelastic surfactant and soft soaps described herein may be used. There are several common hard soap solubilizers and chemistries that may be of utility for this invention. A non-limiting example is BASF products Jordapon® Cl and ACl, which are sodium and ammonium cocoyl isethionate surfactants commonly used in the personal care industry, which have a Lime Soap Dispersion Index of about 17 parts sodium or ammonium cocoyl isethionate to 100 parts calcium oleate, can be used to solubilize or disperse hard soaps formed hereby, with ammonium cocoyl isethionate being the most preferred. Other suitable hard soap solubilizers or dispersants include, but are not necessarily limited to, sodium laureth-13 carboxylate, ammonium laureth-13 carboxylate. Different alkali metal forms of these solubilizers, such as the potassium and lithium forms, may also be useful. In other non-limiting examples alkyl glucosides, alkyl glycols, sorbitan esters, ethoxylated sorbitan esters and the like solubilizers or dispersants may be utilized.

Any suitable VES may be utilized for adding 120 to the aqueous fluid. Suitable VES materials are described, for example, in U.S. Pat. No. 6,506,710 to Hoey, et al., incorporated herein by reference in its entirety, which describes various viscoelastic surfactants and compositions thereof for use in conjunction with various wellbore fluids, including stimulation fluids, drilling muds, fracturing fluids, and in applications such as permeability modification, gravel packing, cementing and the like. Other suitable VES are described in U.S. Patent 6,425,277 and 6,703,352, which are incorporated herein by reference in their entirety. The VES may be formulated to include free fatty acids, which may be used in accordance with method 100 as described herein. Fatty acids as described herein may also be added to the aqueous fluid separately in accordance with method 100. Suitable VES systems include amines, amine salts, quaternary ammonium salts, amidoamine oxides, amine oxides or betaines, or mixtures thereof.

Any suitable metallic particles may be added to the aqueous fluid in accordance with method 100, and adding 120 may be performed in any suitable manner, including as a free-flowing powder of the metallic particles, or by premixing the metallic particles into the VES or the oil, or a combination thereof. Suitable metallic particles include those which may be configured to be dissolved in the aqueous fluid to provide metallic cations, and particularly metallic cations that may combine with the constituents of the aqueous fluid to form various bases. Suitable metallic particles include various alkaline metals, alkaline earth metals and transition metals, and more particularly may include Li, Na, K, Cs, Ca, Mg, Ba, Fe, Mn, Ti, Cu, Ni, Zn, Zr, Mo, V, Co, Al, or Sn, or an alloy thereof, or a combination thereof. The metallic particles may be configured for selectively controllable dissolution and release of their associated cations in the aqueous fluid as described herein. The metallic particles may be selected, for example, to provide metallic cations that form an alkaline metal (e.g. Na, K, Cs, etc.) and/or alkaline earth metal (e.g. Ca, Mg, Ba, etc.) base (e.g. in oxide form or in hydroxide form--such as NaOH, MgOH, CaOH, etc.) to promote saponification of the fatty acids into a soap compounds. Other suitable bases may include various of hydroxides and oxides of Fe, Mn, Cu, Zn, Zr, Mo, V, Co, Al, Sn and the like in their various cationic valence states, including valence states greater than two. The metallic cations may also interact or react with other constituents that may be added to the aqueous fluid, including various bases and salts as described herein, to affect saponification of the oil and increase or break the viscosity of the gelled aqueous fluid, as described herein.

The metallic particles may have any suitable size, shape, composition and morphology (i.e. they may be substantially solid or porous or comprise an agglomeration or consolidation of several particles), but will preferably be configured to provide a predetermined amount of the metallic cations and a predetermined dissolution characteristic, such as a predetermined onset of dissolution, rate of dissolution, extent of dissolution and the like. In certain embodiments, the metallic particles may comprise substantially spherical solid or porous particles. In other embodiments, the metallic particles may have non-spherical shapes, including platelets, rods or other non-spherical shapes or rod-like shapes. In yet other embodiments, the particles may include an agglomeration or consolidation of a number of smaller particles as a powder compact or other consolidated form, and may have an open structure between the agglomerated or consolidated particles to provide a high surface area analogous to a zeolite.

In one embodiment, the metallic particles 12 may be uncoated metallic particles 14, such that the particles begin dissolving and affect saponification immediately upon being added to the aqueous fluid, or if encapsulated as described herein, when released into the gelled aqueous fluid to form the metallic base together with the oil as described herein as shown schematically in FIG. 2 by curve 2. It includes an interval t₁ during which an encapsulant dissolves and a second interval during which the uncoated metallic particle 14 dissolves.

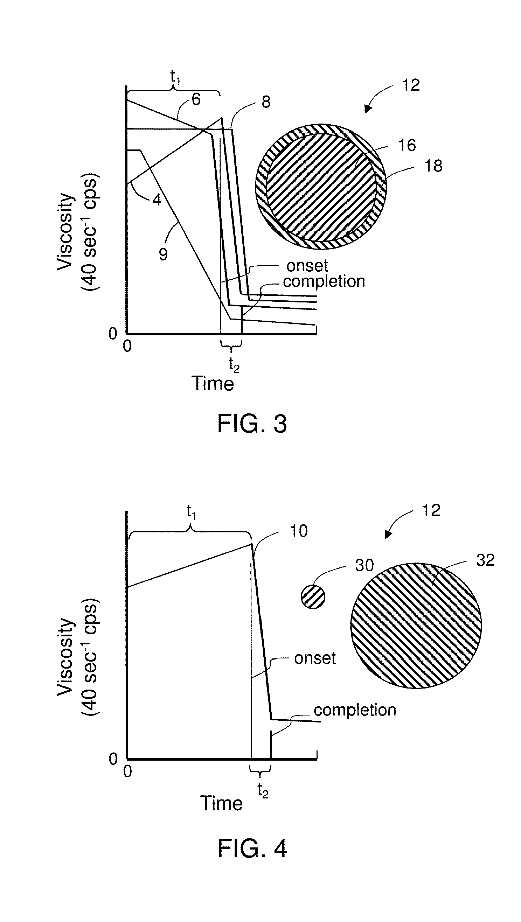

In another embodiment, the metallic particles 12 may be coated and include a coating layer 16 and a particle core 18 as shown in FIG. 3. It includes an interval t₁ during which the coating layer 16 dissolves and a second interval during which the particle core 18 dissolves. The coating layer, for example, may be selected to dissolve at a selectively controllable rate to provide a working interval for use of the gelled aqueous fluid, such as in a fracturing operation, and may cause the viscosity to increase as shown in curve 4, decrease as shown in curve 6 or remain substantially the same as shown in curve 8. Upon dissolution of the coating layer 16, the particle core 14 may also be selected to provide selectively controllable dissolution sufficient to form a metallic base as described herein and cause a rapid, right angle break in the viscosity of the gelled aqueous fluid.

All manner of coated metallic particles may be employed. The coated metallic particles described in co-pending patent applications US2011-0135953 A1 filed on December 8, 2009 and US Serial Nos. 13/220824, 13/220832 and 13/220822 filed on August 30, 2011, and assigned to the same assignee as this application, which are all incorporated by reference herein in their entirety, are particularly useful. These applications describe coated metallic particles having nanoscale coatings (e.g., about 5 nm to about 2500 nm) of Al, Zn, Zr, Mn, Mg, Mo, Ni, Ti, Fe, Cu, Si, Ca or Sn, or an oxide, carbide or nitride thereof, or a cermet thereof, or a combination of any of the aforementioned materials, wherein the coating layer has a chemical composition and the particle core has a chemical composition that is different than the chemical composition of the coating layer.

The coating layers are formed on particle cores of core material, including those having electrolytically reactive particle core materials, including those having a standard oxidation potential greater than or equal to that of Zn, including Mg, Al, Mn or Zn, or a combination thereof, and which also must be understood to include other alkaline and alkaline earth metals, including Li, Na, K and Ca. The particle cores have average particle sizes of about 50nm or greater. The metallic particles are particularly well-suited for selectively controllable dissolution in a wellbore fluid, such as the aqueous wellbore fluids described herein, and particularly may be configured for rapid dissolution in these fluids. The metallic particles may also be deformed to incorporate nanostructuring in the coating layers or particle cores, or both. The stored strain energy associated with nanostructuring may also be utilized to affect selectively controllable dissolution of the metal particles, particularly even dissolution rates that are higher than the dissolution rate of an identical particle that does not have a nanostructured microstructure, i.e., one having stored strain energy associated with the nanostructuring. As also shown comparatively with regard to the coated metallic particles described herein with reference to FIG. 3, in one embodiment an uncoated metallic particle 12 may be selected and configured to begin dissolution more rapidly (i.e., it has a shorter t₁) because it does not have a coating layer and may dissolve at a slower rate (i.e., have a longer t₂) than a coated particle as illustrated by curve 9.

In an exemplary embodiment, the coating layer, including its composition and size or thickness may, for example, be selected to dissolve at a predetermined rate in the aqueous fluid, and provide a first characteristic and coating working interval for the fluid, such as a coating interval corresponding to a wellbore treatment, such as a fracturing treatment. The coating layer may, for example, be selected to maintain the viscosity of the aqueous fluid at a predetermined level, such as a relatively high level, sufficient to affect a wellbore treatment, such as fracturing. The coating layer may comprise any suitable material, including a polymer, metal, cermet or ceramic, or a composite thereof, or a combination thereof. In one embodiment, the coating layer may include a water soluble or water permeable polymer. In another embodiment, the coating layer may include a metallic coating layer comprising Li, Na, K, Al, Zn, Zr, Mn, Mg, Mo, Ni, Ti, Fe, Cu, Si, Ca or Sn, or an oxide, carbide or nitride thereof, or a cermet thereof, or a combination of any of the aforementioned materials. The coating layer may also include multiple layers of the materials mentioned. In one embodiment, the coating layer may have an average thickness of about 5nm to about 2500nm.

The particle core, including its composition and size, may, for example, be selected and configured to dissolve at a predetermined rate in the aqueous fluid, and provide a second characteristic and a core working interval for the fluid, such as an interval corresponding to breaking the gelled aqueous fluid. The particle core may, for example, be selected to promote saponification sufficient to reduce or break the gel and reduce the viscosity of the aqueous fluid to a predetermined level, such as a relatively low level, sufficient to enable removal of the aqueous fluid from the wellbore. Any suitable material may be used for the particle core, including various metals. In one embodiment, the particle core material may include Li, Na, K, Cs, Ca, Mg, Ba, Fe, Ni, Ti, Mn, Cu, Zn, Zr, Mo, V, Co, Al or Sn, or an oxide, carbide or nitride thereof, or a cermet thereof, or an alloy thereof, or combination thereof. In another embodiment, the particle core material may include Ca, Mg, Al, Mn, Fe or Zn, or an alloy thereof, or a combination thereof. The particle core may have any suitable thickness. In one embodiment, the particle core may have an average particle size of about 10 nm to about 200 µm, and more particularly may have an average particle size of about 100 nm to about 20 µm, and even more particularly an average particle size of about 0.5 µm to about 10 µm.

Whether coated or uncoated, the plurality of metallic particles may be formed from one material or combination of materials, or may be formed from more than one material, or more than one combination of materials. Further, the metallic particles may have a single or unimodal average particle size or size distribution of particle sizes, or may have a plurality of average particle sizes or size distributions (multimodal average particle sizes or size distributions). Either or both of these aspects may be used to affect a variable response within the gelled aqueous fluid. For example, a plurality of small metallic particles 12 of a first metallic material 30 can be used to rapidly dissolve and release sufficient first metallic cations to cause an increase in the viscosity over a first selectively controllable time (t₁) interval and plurality of larger particles of a second metallic material 32 may be selected to release sufficient second metallic cations to cause a break or reduction in the viscosity over a second later time interval (t₂) as illustrated by dissolution curve 10 in FIG. 4.

The metallic particles may be present in any suitable amount. In an exemplary embodiment the metallic particles may be present in an amount of about 0.001 percent to about 1.0 percent by weight of the aqueous fluid, and more particularly about 0.01 percent to about 0.6 percent by weight of the aqueous fluid, and even more particularly about 0.05 percent to about 0.36 percent by weight of the aqueous fluid.

As with the selection and use of various types of oils, and metal particles, additional bases or salts may also be optionally be added to affect or control saponification. Various inorganic bases, organic bases, or bases with salts may be employed to affect or control the soap compounds that are formed upon saponification. Other suitable bases include, but are not limited to direct addition of various valences of hydroxides and oxides of Fe, Mn, Cu, Zn, Zr, Mo, V, Co, Al, Sn and the like; or ammonium bases ((CH₃)₄NOH.5H₂O, NH₄OH, etc.) and alkaline organic base ions such as diethanolamine, triethanolamine, choline, and the like. Additional salts may include ammonium, alkali metal and alkali earth metal salts, such as (CH₃)₄NCl, NH₄Cl, KCl, NaBr, MgCl₂, CaCl₂, CaBr₂, etc. The type of "soap" compounds that are produced may be controlled, along with their amount, to alter the VES gel micelles in useful ways.

The method 100 also includes dissolving 130 the metallic particles in the aqueous fluid to provide a compound comprising a metallic base, such as the oxides and hydroxides described herein, may be performed by selecting the aqueous fluid and the metallic particles such that the particles are configured for dissolution in the fluid to produce the compound comprising a metallic base. For example; the exposure of the metal particles (e.g., Mg) to an aqueous fluid containing various chlorides and bromides to dissolve the particles for reaction with water or the additional bases described to form the metal oxides or hydroxide bases described herein.

The method 100 also includes forming 140 in situ a soap reaction product of the fatty acid with the compound comprising the metallic base. The glyceride oil and fatty acid may be selected so that this reaction is entirely internal and occurs, for example, spontaneously over the expected working temperatures of the aqueous fluid, or so that the reaction is further controlled externally by a wellbore condition, such as the temperature of the fluid. The amounts of the glyceride oil, metal particles and any additional bases or salts will be selected so as to provide an amount of the soap reaction product which is capable of affecting the viscosity of the aqueous fluid, such as an amount effective to increase, decrease, or increase and then decrease the viscosity of the gelled aqueous fluid.

Stated another way, the methods and compositions herein involve base-altered fatty acid, more specifically, fatty acids within or introduced into a VES-gelled fluid may be selectively altered by controlled saponification to yield various types and amounts of soap compounds. These compounds may be formed during product use, in one non-limiting embodiment, during the mixing and pumping of a fluid into a well. These compounds or products may be used to substantially improve fluid viscosity or to break down the rod-shaped or worm-shaped VES micelles to regular, spherically-shaped, non-viscous micelles in a brine medium, such as a fluid used in a hydrocarbon recovery operation.

The stoichiometric ratio of the base (such as NaOH) to fatty acids (such as canola oil) may be important. Using less base and not fully saponifying the fatty acids may have some utility. Combinations of the metallic bases and also the type and amount of fatty acids may also be used to control rate of saponification. Each oil has a different fatty acid composition, that is, different types and amounts of the various fatty acids (i.e. triglycerides in particular, but most oils also include diglycerides, monoglycerides, and free fatty acids; and the fatty acids within oils also vary in length of carbon chain, amount of double carbon bonds, placement of double bonds, and the like), and further each oil may also have different types and amounts of natural impurities (non-fatty acid constituents) that may influence rate of saponification. In many cases however, a stoichiometric excess amount of metal particles and the metal base relative to the fatty acid functionality would probably be used. to use or alter all of the fatty acids present. Excess metallic particles to promote excess of the metallic base will promote all of the fatty acid functionality added to become saponified (overbase).

The presence and use of additional salts and bases may influence the initial portion of saponification products generated and may continue to influence the type and amount of specific soap compounds formed over time. With the presence of pH buffering systems, such as boric-borate, acetic-acetate, etc., or the use of slowly solubilizing pH altering compounds, the fluid pH can be optimized to influence the type of base present with various types of salts present in the VES fluid over time.

Additionally, the presence and use of chelants, including but not necessarily limited to, aminocarboxylic acids, iminodisuccinates, polyaspartates, gluconates, and the like may influence the saponification products generated including the metal-base species that may be present or generated along with the type of salts present over time, particularly as the VES fluid temperature shifts, e.g. during initial fluid heat-up as the fluid is pumped downhole or upon reaching final temperature within the reservoir. Chelants that may be of utility include but are not limited to K₅DTPA, Na₃NTA, Na₄EDTA and (NH₄)₂H₂EDTA. Various polymers may be used to influence the interaction of the viscoelastic surfactant and types of soaps formed. Other agents besides salts, pH buffers, polymers, solubilizers, scale inhibitors, and chelants may also be found to be of utility to optimize or further alter the saponification chemistry, the soaps generated, and their association with the viscoelastic surfactant and with one another.

It is expected that the compositions and methods herein would be suitable within a temperature range of about 75 (23.9°C) to about 325°F (162.8°C)., and in another non-restrictive version between a lower limit of about 90°F (32.2°C) to an optional upper limit of about 300°F (148.9°C).

In the gel-breaking and viscosity-enhancing embodiment herein, it is difficult, if not impossible, to specify with accuracy the amount of the various viscosity-affecting components that should be added to a particular aqueous fluid gelled with viscoelastic surfactants to sufficiently or fully break the gel, in general. For instance, a number of factors affect this proportion, including but not necessarily limited to, the particular VES used to gel the fluid, the particular fatty acid and metal base used and their proportions, the temperature of the fluid, the downhole pressure of the fluid, the starting pH of the fluid, and the complex interaction of these various factors. Nevertheless, in order to give an approximate feel for the proportions of the various viscosity-affecting components to be used in the methods and compositions herein, approximate ranges will be provided. The amount of soap reaction product that may be effective in the methods and fluids herein may range from about 50 to about 10,000 ppm based on the total volume of the aqueous fluid. In another non-restrictive, the amount of soap reaction product may range from an alternative lower limit of about 500 ppm to a non-restrictive upper limit of about 8,000 ppm based on the total volume of the aqueous fluid.

For a given reservoir temperature the fluid will be exposed and heated to, whether the VES fluid viscosity increases or decreases is dependant on the amount or proportion of fatty acid soap compounds formed. For instance, as a non-limiting generality, at relatively low concentrations viscosity enhancement occurs, while at relatively higher concentrations viscosity decrease occurs.

Additionally, in each of the cases above, the amount is dependant on the given temperature. That is, the lower the temperature, the more fatty acid soap compounds may be present and still function as viscosity enhancers, whereas the higher the temperature the less fatty acid soap compounds may be present for viscosity enhancement. Further, if too much fatty acid soap compounds are present for a given temperature, a viscosity decrease (VES micelle breaking or reshaping) will occur. At lower temperature more fatty acid soap compounds must be present in order to achieve VES viscosity breaking, whereas at higher temperature less fatty acid soap compounds are required to completely break VES micelle viscosity.

Any suitable mixing apparatus may be used for method 100. In the case of batch mixing, the VES and the aqueous fluid may be blended for a period of time sufficient to form a gelled or viscosified solution.

Viscoelastic surfactants improve the fracturing (frac) fluid performance through the use of a polymer-free system. These systems, compared to polymeric based fluids, may offer improved viscosity breaking, higher sand transport capability, and are in many cases more easily recovered after treatment than are polymers, and are relatively non-damaging to the reservoir with appropriate contact with sufficient quantity of reservoir hydrocarbons, such as crude oil and condensate. The systems are also more easily mixed "on the fly" in field operations and do not require numerous co-additives in the fluid system, as do some prior systems.

The viscoelastic surfactants suitable for use herein include, but are not necessarily limited to, non-ionic, cationic, amphoteric, and zwitterionic surfactants. Specific examples of zwitterionic/amphoteric surfactants include, but are not necessarily limited to, dihydroxyl alkyl glycinate, alkyl ampho acetate or propionate, alkyl betaine, alkyl amidopropyl betaine and alkylimino mono- or di-propionates derived from certain waxes, fats and oils. Quaternary amine surfactants are typically cationic, and the betaines are typically zwitterionic. The thickening agent may be used in conjunction with an inorganic water-soluble salt or organic additive such as phthalic acid, salicylic acid or their salts.

Some non-ionic fluids are inherently less damaging to the producing formations than cationic fluid types, and are more efficacious per pound than anionic gelling agents. Amine oxide viscoelastic surfactants have the potential to offer more gelling power per pound, making it less expensive than other fluids of this type.

The amine oxide gelling agents RN⁺(R')₂O⁻ may have the following structure : 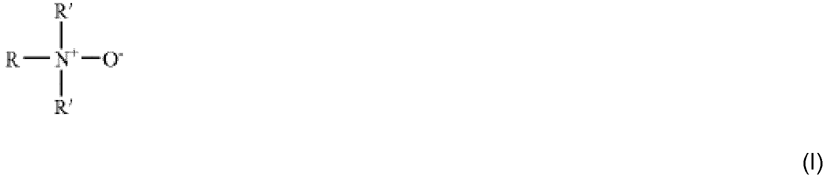 where R is an alkyl or alkylamido group averaging from about 8 to 24 carbon atoms and R' are independently alkyl groups averaging from about 1 to 6 carbon atoms. In one non-limiting embodiment, R is an alkyl or alkylamido group averaging from about 8 to 16 carbon atoms and R' are independently alkyl groups averaging from about 2 to 3 carbon atoms. In an alternate, non-restrictive embodiment, the amidoamine oxide gelling agent is Akzo Nobel's Aromox APA-T formulation, which should be understood as a dipropylamine oxide since both R' groups are propyl.

Suitable materials include ClearFRAC™, which may also comprise greater than 10% of a glycol. One preferred VES is an amine oxide. As noted, a particularly preferred amine oxide is APA-T, sold by Baker Hughes as SurFRAQ^{™} VES. SurFRAQ is a VES liquid product that is 45-55% APA-T sold by Akzo Nobel and from about 25-40% propylene glycol. These viscoelastic surfactants are capable of gelling aqueous solutions to form a gelled aqueous base fluid. The method 100 and compositions herein also cover commonly known materials as Aromox APA-T manufactured by Akzo Nobel and other known viscoelastic surfactant gelling agents common to stimulation treatment of subterranean formations.

The amount of VES included in the fracturing fluid depends on at least two factors. One involves generating enough viscosity to control the rate of fluid leak off into the pores of the fracture, and the second involves creating a viscosity high enough to keep the proppant particles suspended therein during the fluid injecting step, in the non-limiting case of a fracturing fluid. Thus, depending on the application, the VES is added to the aqueous fluid in concentrations ranging from about 0.5 percent to about 25 percent by volume of the aqueous fluid, alternatively up to about 12 percent by volume of the aqueous fluid (from about 5 to 120 gallons per thousand gallons (gptg)). In one embodiment, the VES range for method 100 and the compositions described herein is from about 0.6 percent to about 10.0 percent by volume of the aqueous fluid. In another embodiment, the amount of VES ranges from 0.8 percent to about 6.0 percent by volume of the aqueous fluid.

It is expected that the viscosity-affecting compositions herein may be used to reduce or increase the viscosity of a VES-gelled aqueous fluid regardless of how the VES-gelled fluid is ultimately utilized. For instance, the viscosity breaking or improving compositions could be used in all VES applications including, but not limited to, VES-gelled friction reducers, VES viscosifiers for loss circulation pills, fracturing fluids, gravel pack fluids, viscosifiers used as diverters in acidizing (including foam diverters), VES viscosifiers used to clean up drilling mud filter cake, remedial clean-up of fluids after a VES treatment (post-VES treatment), in regular or foamed fluid forms (i.e. the fluids may be "energized" with or the gas phase of foam being N₂ or CO₂), and the like.

A value of the method 100 and compositions herein is that a fracturing fluid or other fluids may be designed to have enhanced breaking characteristics, such as control of the onset of the break and high breaking rates so as to enable desirable right angle breaking curves. That is, fluid breaking is no longer entirely dependant on external reservoir conditions for viscosity break: the rate of viscosity reduction, if essentially complete break is achieved, occurs more completely throughout the reservoir interval. Importantly, better clean-up of the VES fluid from the fracture and wellbore may be achieved thereby. Better clean-up of the VES directly influences the success of the fracture treatment, which is an enhancement of the well's hydrocarbon productivity. Previous VES fluid clean-up limitations and failures may now be overcome or improved by the use of this clean-up technology.

In an exemplary embodiment, the method 100 and compositions herein for making an aqueous fracturing fluid include adding 120 (e.g., blending) a VES into an aqueous fluid. The aqueous fluid could be, for example, water, brine, aqueous-based foams or water-alcohol mixtures. Any suitable mixing apparatus may be used for this procedure. In the case of batch mixing, the VES and the aqueous fluid are blended for a period of time sufficient to form a gelled aqueous fluid. Alternatively, the viscosity-affecting component compositions may be added separately.

Propping agents are typically added to the base fluid after the addition of the VES. Propping agents include, but are not limited to, for instance, quartz sand grains, glass and ceramic beads, bauxite grains, walnut shell fragments, aluminum pellets, nylon pellets, and the like. The propping agents are normally used in concentrations between about 1 to 14 pounds per gallon (120-1700 kg/m³) of the aqueous fracturing fluid composition, but higher or lower concentrations may be used as the fracture design requires. The base fluid may also contain other conventional additives common to the well service industry such as water wetting surfactants, non-emulsifiers and the like. As noted, the base fluid may also contain other nonconventional additives which may contribute to the viscosity affecting action of the VES fluid, and which are added for that purpose.

In a typical fracturing operation, the fracturing fluid may be pumped at a rate sufficient to initiate and propagate a fracture in the formation and to place propping agents into the fracture. A typical fracturing treatment would be conducted by mixing a 10.0 to 60.0 gallon/1000 gal water (volume/volume--the same values may be used with any SI volume unit, e.g. 60.0 liters/1000 liters) amine oxide VES, such as Aromox APA-T from Akzo Nobel, in a 4% (w/v) (332 lb/1000 gal, 39.8 kg/m³) KCl solution at a pH ranging from about 6.0 to about 13.5. The breaking components are typically added during the VES addition using appropriate mixing and metering equipment, or if needed in a separate step after the fracturing operation is complete.

In one embodiment, the method is practiced in the absence of gel-forming polymers and/or gels or aqueous fluid having their viscosities enhanced by polymers. However, combined use with polymers and polymer breakers may also be of utility. For instance, polymers may also be added to the VES-gelled fluid for fluid loss control purposes. Types of polymers that may serve as fluid loss control agents include, but are not necessarily limited to, various starches, polyvinyl acetates, polylactic acid, guar and other polysaccharides, gelatins, and the like.

The terms "a" and "an" herein do not denote a limitation of quantity, but rather denote the presence of at least one of the referenced items. The modifier "about" used in connection with a quantity is inclusive of the stated value and has the meaning dictated by the context (e.g., includes the degree of error associated with measurement of the particular quantity). Furthermore, unless otherwise limited all ranges disclosed herein are inclusive and combinable (e.g., ranges of "up to about 25 weight percent (wt.%), more particularly about 5 wt.% to about 20 wt.% and even more particularly about 10 wt.% to about 15 wt.%" are inclusive of the endpoints and all intermediate values of the ranges, e.g., "about 5 wt.% to about 25 wt.%, about 5 wt.% to about 15 wt.%", etc.). The use of "about" in conjunction with a listing of constituents of an alloy composition is applied to all of the listed constituents, and in conjunction with a range to both endpoints of the range. Finally, unless defined otherwise, technical and scientific terms used herein have the same meaning as is commonly understood by one of skill in the art to which this invention belongs. The suffix "(s)" as used herein is intended to include both the singular and the plural of the term that it modifies, thereby including one or more of that term (e.g., the metal(s) includes one or more metals). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments.

It is to be understood that the use of "comprising" in conjunction with the alloy compositions described herein specifically discloses and includes the embodiments wherein the alloy compositions "consist essentially of" the named components (i.e., contain the named components and no other components that significantly adversely affect the basic and novel features disclosed), and embodiments wherein the alloy compositions "consist of" the named components (i.e., contain only the named components except for contaminants which are naturally and inevitably present in each of the named components).

While one or more embodiments have been shown and described, modifications and substitutions may be made thereto without departing from the spirit and scope of the invention. Accordingly, it is to be understood that the present invention has been described by way of illustrations and not limitation.

## Claims

1. A method for affecting the viscosity of an aqueous fluid gelled with a viscoelastic surfactant (VES) comprising:
providing an aqueous fluid;
adding to the aqueous fluid, in any order:
i. at least one VES comprising a non-ionic surfactant, cationic surfactant, amphoteric surfactant or zwitterionic surfactant, or a combination thereof,
ii. a glyceride oil comprising a fatty acid, and
iii. a plurality of metallic particles to produce a mixture comprising dispersed metallic particles,
to form a gelled aqueous fluid comprising a plurality of elongated micelles;
dissolving at least a portion of the metallic particles in the aqueous fluid to provide a compound comprising a metallic base; and
forming in situ a soap reaction product of the fatty acid with the compound, wherein the soap reaction product affects the viscosity of the gelled aqueous fluid.

2. The method of claim 1, wherein the soap reaction product increases, decreases, or increases and then decreases a viscosity of the gelled aqueous fluid.

3. The method of claim 1 or claim 2, wherein dissolving the metallic particles in the aqueous fluid to provide a compound comprising a metallic base comprises forming an oxide or hydroxide comprising cations of the metallic particles, or a combination thereof.

4. The method of any preceding claim, wherein the metallic particles are present in an amount of about 0.001 percent to about 1.0 percent by volume of the aqueous fluid.

5. The method of any preceding claim, wherein the metallic particles have an average particle size of about 10 nm to about 200 µm, preferably from about 100 nm to about 20 µm, more preferably from about 0.5 µm to about 10 µm.

6. The method of any preceding claim, wherein the metallic particles comprise coated metallic particles comprising coating layers that are configured to selectively control access of the aqueous fluid to the particle core, and particle cores that are configured for dissolution in the aqueous fluid to provide the compound comprising a metallic base and form the soap reaction product, preferably wherein the metallic base comprises an oxide or hydroxide comprising cations of the metallic particles.

7. The method of claim 6, wherein the coating layers comprise a polymer, ceramic, metal or inorganic compound, or a composite thereof, or a combination thereof, preferably wherein the coating layers comprise Al, Zn, Zr, Mn, Mg, Mo, Ni, Ti, Fe, Si, Ca or Sn, or an oxide, carbide or nitride thereof, or a combination of any of the aforementioned materials, and wherein the coating layer has a chemical composition and the particle core has a chemical composition that is different than the chemical composition of the coating layer.

8. The method of claim 6 or claim 7, wherein the coating layers have an average thickness of about 5nm to about 2500nm.

9. The method of any preceding claim, wherein the metallic base comprises an oxide or hydroxide comprising cations of the metallic particles, and wherein the metallic particles, preferably the particle cores, comprise Li, Na, K, Ca, Mg, Ti, Fe, Mn, Zn, Zr, Mo, Al, or Sn, or an alloy thereof, or a combination thereof, preferably wherein the metallic particles, preferably the particle cores, comprise Ca, Mg, Al, Fe, Mn or Zn, or an alloy thereof or a combination thereof.

10. The method of any preceding claim, wherein the fatty acid comprises a plant oil , animal oil, or fish oil, or a combination thereof.

11. The method of any preceding claim, wherein adding to the aqueous fluid also comprises adding an alkali metal base, alkali earth metal base, inorganic base, ammonium base or organic base, or a combination thereof.

12. The method of any preceding claim, wherein adding to the aqueous fluid also comprises adding a salt selected from the group consisting of an alkali metal halide salt, an alkali earth metal halide salt, an ammonium halide salt, and mixtures thereof.

13. The method of any preceding claim, wherein the amount of soap reaction product comprises from about 50 to about 10,000 ppm by volume of the gelled aqueous fluid.

14. The method of any preceding claim, wherein the viscosity and/or sand transportability of the gelled aqueous fluid is increased (or improved) by the soap reaction product (i.e. as compared with an identical gelled aqueous fluid absent the soap reaction product).

15. The method of any of claims 1-13, wherein the soap reaction product decreases the viscosity of the gelled aqueous fluid by changing its micelle structure, preferably wherein there are no other viscosity decreasing agents in the gelled aqueous fluid besides the soap reaction product(s).

16. The method of any preceding claim, wherein the composition further comprises at least one hard soap solubilizer or dispersant, preferably wherein the hard soap solubilizer or dispersant comprises sodium cocoyl isethionate, ammonium cocoyl isethionate, sodium laureth-13 carboxylate, ammonium laureth-13 carboxylate, alkyl glucosides, alkyl glycols, sorbitan esters or ethoxylated sorbitan esters, or a combination thereof.

17. The method of any preceding claim, wherein the gelled aqueous fluid comprises an oil-soluble internal phase containing the soap reaction product.

18. The method of any preceding claim, wherein the gelled aqueous fluid comprises a fracturing fluid, proppant carrying fluid, gravel packing fluid, lost circulation pill, permeability-modifying fluid, diverter fluid, clean up fluid or foamed fluid.

19. The method of any preceding claim, wherein the VES comprises dihydroxyl alkyl glycinates, alkyl ampho acetates, alkyl ampho proprionates, alkyl betaines, alkyl amidopropyl betaines, alkylimino mono- or di-propionates, quaternary amines, amines, amine salts, quaternary ammonium salts, amine oxides or amidoamine oxides, or a combination thereof.

20. The method of any preceding claim, wherein the metallic particles have a multimodal distribution of average particle sizes.

21. The method of any of claims 1-19, wherein the metallic particles comprise nanostructured metallic particles.
